# FASCICULE DE BREVET EUROPEEN

(11) **EP 3 547 070 B1**
(45) Date de publication et mention de la délivrance du brevet: **23.12.2020**
(21) Numéro de dépôt: 19163937.6
(22) Date de dépôt: 20.03.2019
(51) Int. Cl.: G05G 1/30, G05G 5/03

(54) **SYSTÈME DE GÉNÉRATION D'EFFORT POUR PÉDALE DE COMMANDE**
KRAFTGENERIERUNGSSYSTEM FÜR STEUERPEDAL
FORCE GENERATION SYSTEM FOR CONTROL PEDAL

(30) Priorité: 30.03.2018 FR 1852797
(43) Date de publication de la demande: 02.10.2019
(73) Titulaire: VALEO EMBRAYAGES, 80009 Amiens (FR)
(72) Inventeur: COLIN, Sébastien, 95892 CERGY PONTOISE (FR)
(74) Mandataire: Vincent, Catherine Marie Marguerite

(56) Documents cités:
- WO-A1-2014/048661
- WO-A2-03/039899

## Description

### Domaine technique

L'invention se rapporte au domaine des systèmes de commande à pédale, notamment pour la commande d'un organe dans un véhicule automobile, et plus particulièrement à un système de génération d'effort pour une pédale de commande dans un tel système.

### Arrière-plan technologique

Des systèmes de commande à pédale sont utilisés de longue date dans l'industrie automobile, notamment pour la commande d'un actionneur de freinage ou d'un actionneur de transmission.

Lorsque l'actionneur de freinage ou de transmission comporte un maitre-cylindre hydraulique auquel la pédale de commande est directement couplée, une force de réaction générée par le maitre-cylindre hydraulique peut être retransmise à la pédale de commande.

Lorsque l'actionneur de freinage ou de transmission ou autre organe commandé n'est pas capable de générer une force de réaction hydraulique sur la pédale de commande, par exemple dans le cas où l'actionneur est découplé de la pédale de commande et commandé électroniquement sur la base d'une détection de la position de la pédale ou d'un élément lié à la pédale, il en résulte un changement ergonomique significatif pour l'utilisateur habitué à la force de réaction hydraulique.

Plus généralement, une force de réaction est utile pour permettre à un utilisateur de ressentir la réaction du système commandé à l'action de l'utilisateur sur la pédale de commande.

Ainsi, il existe un besoin de dispositifs de génération d'effort capables de rétroagir sur une pédale de commande de manière à produire un effort en réaction à un actionnement de la pédale, et notamment de manière à simuler une force de réaction d'un maitre-cylindre hydraulique.

L'état de la technique dans ce domaine est illustré par la demande WO2014048661, qui fournit un dispositif de commande d'embrayage à pédale qui simule une force de réaction hydraulique au moyen d'un bras de pédale interagissant avec un levier pivotant soumis à la réaction d'un ressort, dans lequel le bras de pédale se déplace le long d'un contour du levier pivotant lorsque la pédale est actionnée.

En outre, l'état de la technique le plus proche est représenté dans le document WO 03/039899 A2, qui décrit le préambule de la revendication 1.

Ce dispositif comporte un nombre important de composants et est complexe à fabriquer. En outre, l'effort de réaction généré par ce dispositif est complexe à adapter pour différents véhicules.

### Résumé

Une idée à la base de l'invention est de fournir un système permettant de générer un effort de résistance à la pédale similaire à l'effort d'un système d'actionnement hydraulique. Une idée à la base de l'invention est de fournir un tel système de génération d'effort pour une pédale de commande qui ne présente pas au moins certains des inconvénients de l'art antérieur. Une idée à la base de l'invention est de fournir un système de génération d'effort constituant une alternative aux systèmes existants. En particulier, une idée à la base de l'invention est de fournir un système de génération d'effort simple à fabriquer.

Certains aspects de l'invention partent de l'idée de fournir un système de génération d'effort dont les caractéristiques d'effort généré peuvent être facilement adaptées aux besoins du véhicule. En particulier, certains aspects de l'invention partent de l'idée de fournir un système de génération d'effort dont les caractéristiques de l'effort généré peuvent être facilement modifiées.

Selon un mode de réalisation, l'invention fournit un système de génération d'effort destiné à être associé à une pédale montée mobile en rotation sur un tablier d'un véhicule automobile, ledit système de génération d'effort comportant
- un carter destiné à être fixé sur le tablier du véhicule,
- une came portant une surface de came,
- une bielle présentant une première extrémité destinée à être, en fonctionnement, reliée à la pédale et une deuxième extrémité montée en rotation sur la came autour d'un axe de rotation W,
- un dispositif de rappel élastique comportant :
   ∘ un suiveur de came mobile en translation le long d'une direction de coulissement,
   ∘ un organe de rappel configuré pour repousser le suiveur de came en direction de la surface de came de manière à ce que le suiveur de came exerce une force de rappel sur la came selon la direction de coulissement du suiveur de came,
la came étant montée mobile en rotation sur le carter autour d'un axe de rotation Z distinct de l'axe de rotation W de la deuxième extrémité de la bielle de sorte que, en déplacement, la bielle entraîne ladite came en rotation autour de l'axe de rotation Z selon un sens de rotation lors d'une rotation de la pédale, la surface de came et le suiveur de came étant configurés pour que le suiveur de came se déplace le long de la surface de came lors d'une rotation de la came autour de l'axe de rotation Z et pour que la force de rappel s'oppose à la rotation de la came selon le sens de rotation.

Grâce à ces caractéristiques, il est possible de simuler un effort de façon simple. En particulier, un tel système présente un nombre de composant limités rendant sa fabrication moins complexe.

En outre un tel système de génération d'effort présente des caractéristiques facilement adaptables. En particulier, l'effort généré par un tel système de génération d'effort peut varier de façon simple en fonction de la surface de came et de l'organe de rappel. Ainsi, il est possible à partir de systèmes présentant une structure analogue de faire varier la courbe de l'effort généré de façon simple en modifiant la surface de came et/ou les caractéristiques de l'organe de rappel. Un tel système de génération d'effort constitue une bonne alternative aux systèmes existant.

Selon des modes de réalisation avantageux, un tel système peut présenter une ou plusieurs des caractéristiques suivantes.

Selon un mode de réalisation, le dispositif de rappel élastique comporte un capteur de déplacement configuré pour détecter la position du suiveur de came le long de la direction de coulissement.

Ainsi, un tel système de génération d'effort peut également remplir la fonction de détection de la position de la pédale, en vue de commander un actionneur d'embrayage à distance par exemple.

Selon un mode de réalisation, le dispositif de rappel élastique comporte en outre un support de suiveur de came portant le suiveur de came, ledit support étant configuré pour guider le suiveur de came selon la direction de coulissement du suiveur de came.

Selon un mode de réalisation, le capteur de déplacement est configuré pour capter la position du support le long de la direction de coulissement du suiveur de came.

Selon un mode de réalisation, l'axe de rotation Z de la came est perpendiculaire à la direction de coulissement du suiveur de came.

Selon un mode de réalisation, le système de génération d'effort comporte en outre une tige de liaison mobile le long de la direction de coulissement du suiveur de came, la première extrémité de la bielle étant monté en rotation sur ladite tige de liaison, ladite tige de liaison étant destinée à être montée en rotation sur la pédale.

Selon un mode de réalisation, la bielle forme un angle avec la direction de coulissement du suiveur de came.

Selon un mode de réalisation, le carter présente une première extrémité cylindrique creuse, le dispositif de rappel élastique étant monté dans la première extrémité du carter, ladite première extrémité du carter étant configurée pour guider en translation le suiveur de came le long de la direction de coulissement du suiveur de came. Selon un mode de réalisation, le carter comporte en outre une deuxième extrémité cylindrique creuse, la tige de liaison étant logée mobile dans et guidée en déplacement par ladite deuxième extrémité creuse.

Selon un mode de réalisation, le carter comporte une portion centrale creuse, la came étant montée mobile en rotation dans ladite portion centrale creuse.

Selon un mode de réalisation, la première extrémité du carter présente une génératrice parallèle à la direction de coulissement du suiveur de came, ladite première extrémité comportant un fond, l'organe de rappel étant logé dans ladite première extrémité en appui contre d'une part le fond du logement et, d'autre part, le support de suiveur de came, ledit support de suiveur de came faisant saillie du logement depuis l'extrémité ouverte de la première extrémité cylindrique creuse du carter.

Selon un mode de réalisation, l'organe de rappel est un ressort.

Selon un mode de réalisation, le suiveur de came est un galet monté mobile en rotation autour d'un axe de rotation perpendiculaire à la direction de coulissement du suiveur de came.

Selon un mode de réalisation, le support de suiveur de came comporte deux ailes portant un arbre, le galet étant monté sur ledit arbre mobile en rotation autour dudit arbre.

Selon un mode de réalisation, l'invention fournit également un ensemble d'embrayage comportant un support de pédale destiné à être monté sur un tablier de véhicule automobile, une pédale montée en rotation sur le support de pédale autour d'un axe de rotation X, et un système de génération d'effort tel que ci-dessus, la première extrémité de la bielle étant liée à la pédale.

Selon un mode de réalisation, une première extrémité d'une tige de liaison est montée en rotation sur la pédale autour d'une troisième axe de rotation Y, ledit troisième axe de rotation Y étant perpendiculaire à la direction de coulissement du suiveur de came, la première extrémité de la bielle étant montée en rotation sur une deuxième extrémité de la tige de liaison.

### Brève description des figures

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés.
- La figure 1 représente une vue schématique de principe d'un système de commande à pédale dans lequel des modes de réalisation de l'invention peuvent être utilisés ;
- La figure 2 représente une vue en perspective schématique du système de génération d'effort de la figure 1 dans une position correspondant à une position de repos de la pédale et dans laquelle le carter n'est que partiellement illustré ;
- La figure 3 représente une vue en perspective schématique du système de génération d'effort de la figure 1 dans une position correspondant à une position enfoncée de la pédale et dans laquelle le carter n'est que partiellement illustré ;
- La figure 4 représente un graphique des courbes caractéristiques d'effort de réaction en fonction du déplacement d'une pédale.

### Description détaillée de modes de réalisation

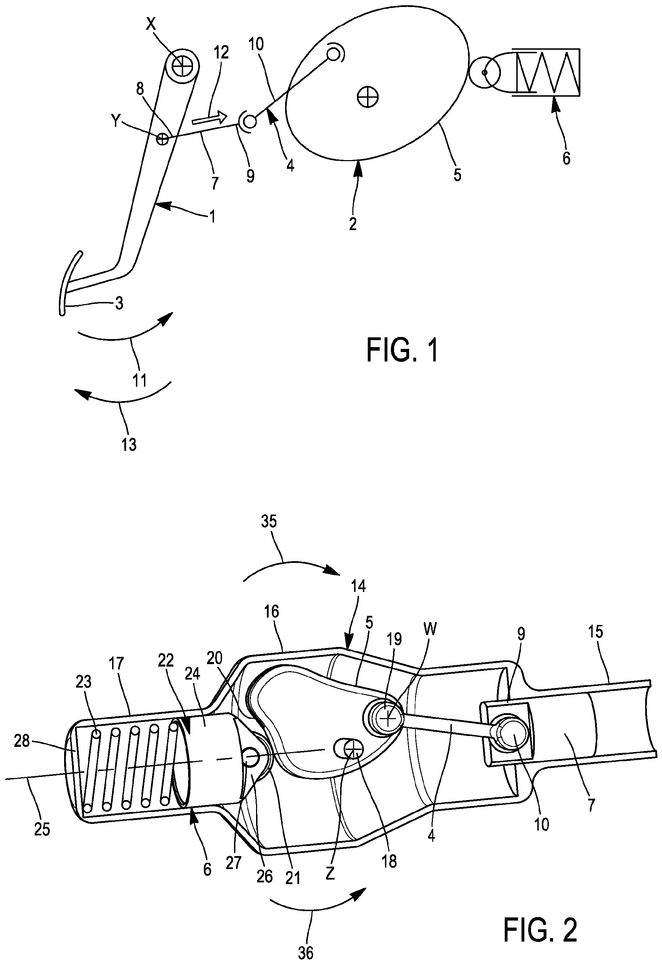

La figure 1 représente une pédale de commande 1 associée à un système de génération d'effort 2. Une telle pédale 1 est par exemple une pédale de commande d'embrayage destinée à commander un actionneur d'embrayage contrôlé électroniquement. Un tel actionneur d'embrayage (non représenté) est aussi connu sous la dénomination anglo-saxonne « *Clutch by wire* ».

La pédale 1 est montée sur un châssis de véhicule, par exemple à un tablier avant d'un habitacle de véhicule, au moyen d'un support de pédale (non illustrés). Plus particulièrement, le support de pédale est fixé sur le châssis du véhicule et la pédale 1 est montée sur ledit support de pédale.

La pédale 1 comporte à une première extrémité une portion d'appui 3, par exemple sous la forme d'une plaque d'appui, sur laquelle un utilisateur appuie pour actionner la pédale 1. Une deuxième extrémité de la pédale 1 opposée à la première extrémité est montée sur le support de pédale en rotation autour d'un axe de rotation X.

Comme illustré schématiquement sur la figure 1, le système de génération d'effort 2 comporte une bielle 4, une came 5 et un dispositif de rappel 6. Ce système de génération d'effort 2 est lié à la pédale 1 par une tige de liaison 7. Une première extrémité 8 de cette tige de liaison 7 est montée en rotation sur la pédale 1 autour d'un axe de rotation Y. Une première extrémité 10 de la bielle 4 est montée en rotation sur une deuxième extrémité 9 de la tige de liaison 7.

Comme expliqué plus en détails ci-après, ce système de génération d'effort 2 permet de générer un effort de rappel tendant à ramener la pédale 1 vers une position de repos telle qu'illustrée sur la figure 1 et à simuler une force de réaction pour un utilisateur appuyant sur la portion d'appui 3 de la pédale 1.

Lorsqu'un utilisateur appuie sur la portion d'appui 3 de la pédale 1, la pédale 1 tourne autour de l'axe de rotation X selon un premier sens de rotation 11. Cette rotation de la pédale 1 selon le premier sens de rotation 11 entraine un déplacement de la tige de liaison 7 en direction du système de génération d'effort 2 illustré par la flèche 12 sur la figure 1. Ce déplacement de la tige de liaison 7 transmet une force d'appui de l'utilisateur au système de génération d'effort 2. En réaction, le système de génération d'effort 2 exerce une force de rappel sur la tige de liaison 7 qui s'oppose à la force d'appui. Cette force de rappel simule pour l'utilisateur une force de réaction analogue à celle produite par une pédale de commande actionnant un système hydraulique classique. Cette force de rappel tend en outre à repousser la tige de liaison 7 et donc entraîner la pédale 1 en rotation autour de son axe de rotation X selon un deuxième sens de rotation 13 opposé au premier sens de rotation 11 afin de repousser la pédale 1 vers sa position de repos lorsque l'utilisateur n'appuie plus sur la portion d'appui 3. D'autres ressorts de rappel peuvent également être prévus dans un tel système de commande afin de repousser la pédale 1 vers sa position de repos.

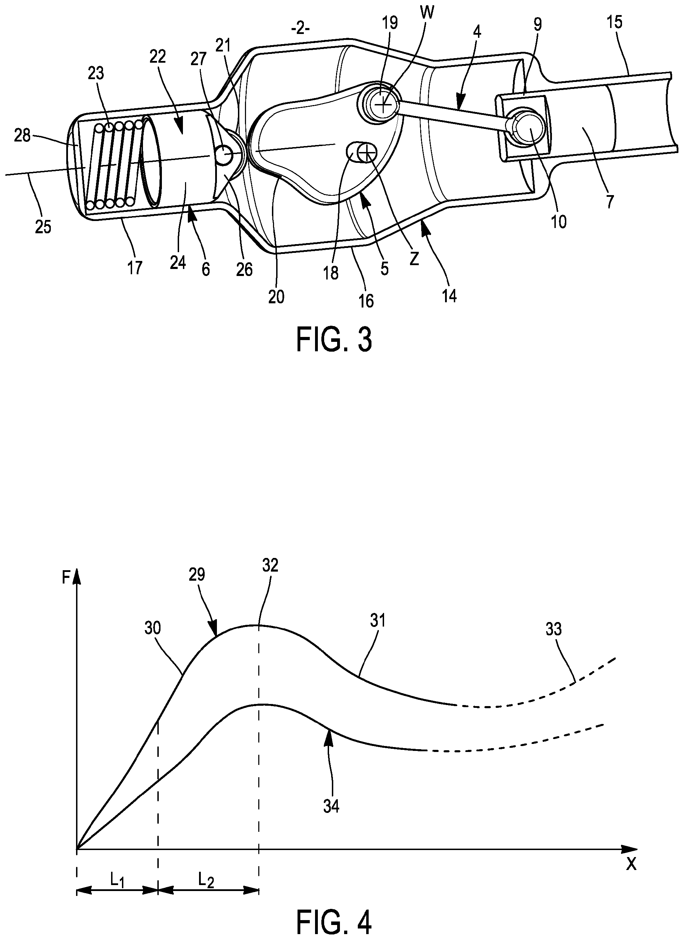

Les figures 2 et 3 illustrent le système de génération d'effort selon un mode de réalisation préférentiel.

Le système de génération d'effort 2 comporte un carter 14. Ce carter 14 est creux et monté fixe sur la structure du véhicule, par exemple sur le tablier. Ce carter 14 présente une première extrémité creuse formant une portion tubulaire 15, une portion centrale 16 creuse et une deuxième extrémité cylindrique creuse formant un logement 17.

La portion tubulaire 15 est ouverte à ses deux extrémités. Autrement dit, une première extrémité de la portion tubulaire 15 débouche vers l'extérieur du carter 14 et une deuxième extrémité de la portion tubulaire 15 débouche dans la portion centrale creuse 16.

La deuxième extrémité 9 de la tige de liaison 7 est logée dans la portion tubulaire 15 et traverse l'ouverture de la première extrémité de ladite portion tubulaire 15. Cette deuxième extrémité 9 de la tige de liaison 7 présente des dimensions complémentaires des dimensions internes de la portion tubulaire 15 de manière à guider la tige de liaison 7 en déplacement selon une direction longitudinale de la portion tubulaire 15. Pour cela, un jeu fonctionnel peut être prévu entre la tige de liaison 7 et la paroi de la portion tubulaire 15. Ce jeu fonctionnel permet de guider en déplacement la tige de liaison 7 selon la direction longitudinale de la portion tubulaire tout en autorisant un léger débattement angulaire, typiquement le débattement angulaire engendré par la liaison entre la tige de liaison 7 et la pédale 1 lors d'une rotation de la pédale 1 autour de son axe de rotation X. La deuxième extrémité 9 de la tige de liaison est agencée dans la portion tubulaire 15 de sorte que la première extrémité 10 de la bielle 4 montée sur ladite deuxième extrémité 9 de la tige de liaison 7 soit logée coulissante dans la portion tubulaire 15 au niveau de la deuxième extrémité de ladite portion tubulaire 15.

La came 5 est montée en rotation autour d'un axe de rotation Z dans la portion centrale 16 du carter 14. Pour cela, la portion centrale 15 comporte par exemple un arbre 18 logé dans la portion centrale 15 et sur lequel est montée la came 5. Cet axe de rotation Z est orthogonal à l'axe longitudinal de la portion tubulaire 15.

La bielle 4 est logée dans le carter 14. La deuxième extrémité 19 de la bielle 4 opposée à la première extrémité 10 de ladite bielle 4 est montée en rotation sur la came 5 autour d'un axe de rotation W. Cet axe de rotation W est distinct de l'axe de rotation Z de la came 5. Plus particulièrement, l'axe de rotation W est excentré sur la came 5 par rapport à l'axe de rotation Z de manière à ce qu'un déplacement de la bielle 4 entraîne une rotation de la came 5 autour de son axe de rotation Z.

La came 5 porte une surface de came 20. Cette surface de came 20 est tournée vers le logement 17 du carter 14. Plus particulièrement, cette surface de came 20 est en regard du logement 17.

Le dispositif de rappel 6 est logé dans le logement 17. Le dispositif de rappel 6 comporte un suiveur de came 21, un support 22 du suiveur de came 21 et un organe de rappel 23.

Le suiveur de came est un galet 21 monté mobile en rotation sur le support 22. Ce galet 21 est de forme cylindrique. La tranche de ce galet 21 constitue une piste de roulement destinée à rouler le long de la surface de came 20.

Le support 22 est partiellement logé dans le logement 17. Le support 22 comporte un corps de support 24 cylindrique de section complémentaire à la section interne du logement 17. Ce corps de support 24 est logé au moins partiellement dans le logement 17. Ainsi, le corps de support 24 et donc le support 22 et le suiveur de came 21 sont guidés en coulissement par le logement 17 le long d'une direction de coulissement 25 correspondant à l'axe longitudinal du logement 17.

Le support corps de support 24 fait saillie du logement 17 et présente une face située hors du logement 17 dans la portion centrale creuse 16 du carter 14. Cette face du corps de support 24 en regard de la came 5 porte deux ailes parallèles 26 logées dans la portion centrale creuse 16. Ces ailes parallèles 26 comportent des orifices en vis-à-vis dans lesquels est logé un arbre 27. Le galet 21 est monté en rotation sur ledit arbre 27 de sorte que ledit galet est logé dans la portion creuse 16.

L'organe de rappel est un ressort 23 agencé dans le logement 17 entre le corps de support 24 et un fond 28 dudit logement. Plus particulièrement, le ressort 23 est un ressort hélicoïdal. Le ressort 23 exerce une force de rappel sur le corps de support 24 tendant à repousser le support 22, et donc le suiveur de came 21, selon la direction de coulissement 25. Ainsi, le ressort 23 exerce une force de rappel qui appuie le galet 21 sur la surface de came 20.

La force de rappel générée par le dispositif de rappel 6 a pour fonction d'une part de ramener la pédale 1 vers sa position de repos et, d'autre part, de simuler pour un utilisateur appuyant sur la pédale 1 une force de résistance comparable à la résistance ressentie par ledit utilisateur lorsqu'il appuie sur une pédale d'embrayage mécanique. Autrement dit, le système de génération d'effort 2 sert à produire une force de réaction F sur la pédale 1 en réponse à un actionnement de ladite pédale 1.

La figure 2 illustre le système de génération d'effort 2 dans une position correspondant à la position de repos de la pédale 1. La figure 3 illustre le système de génération d'effort 2 dans une position correspondant à une position d'actionnement de la pédale 1, c'est-à-dire lorsqu'un appui sur la portion d'appui 3 de la pédale 1 a entraîné une rotation de la pédale 1 autour de l'axe de rotation X.

En position de repos, le suiveur de came 21 est en appui sur la surface de came 20 au niveau d'une première portion de ladite surface de came 20. Cet appui est assuré par la force de rappel générée par le ressort 23 qui repousse le suiveur de came 21 contre la surface de came 20.

La première portion de la surface de came 20 présente une inclinaison par rapport à la direction d'appui du suiveur de came 21, c'est-à-dire par rapport à la direction de coulissement 25. Cette inclinaison de la première portion de la surface de came 20 par rapport à la direction d'application de la force de rappel tend à entraîner en rotation la came 5 autour de son axe de rotation Z selon un premier sens de rotation 35. L'axe de rotation W de la deuxième extrémité 19 de la bielle 4 est agencé sur la came 5 de sorte qu'une rotation de la came 5 selon ce premier sens de rotation 35 tend à repousser la bielle 4 vers la tige de liaison 7 et donc à repousser la tige de liaison 7 vers la pédale 1.

Ainsi, en l'absence d'appui d'un utilisateur sur la portion d'appui 3 de la pédale, l'appui du suiveur de came 21 sur la surface de came 20 repousse la bielle 4 et la tige de liaison 7 ce qui maintien en position de repos la pédale 1.

Lorsqu'un utilisateur appuie sur la portion d'appui 3 de la pédale 1, la force d'appui s'oppose à la force de rappel exercée par le suiveur de came 21 sur la came 5. Comme expliqué ci-dessus, cet appui entraîne le déplacement de la tige de liaison 7 en direction du système de génération d'effort 2. Ainsi, comme illustré sur la figure 3, la deuxième extrémité 9 de la tige de liaison 7 est repoussée dans la portion tubulaire 15 en direction de la came 5. Le déplacement de la deuxième extrémité 9 de la tige de liaison 7 en direction de la came 5 repousse la bielle 4 en direction de la came 5 de sorte que la deuxième extrémité 19 de la bielle 4 entraîne en rotation la came 5 selon un deuxième sens de rotation 36 opposé au premier sens de rotation 35.

Lors de la rotation de la came 5, et donc de la surface de came 20, le suiveur de came 21 est maintenu en appui sur la surface de came 20 par le ressort 23. Ainsi, la rotation de la came 5 autour de l'axe de rotation Z entraîne le déplacement du suiveur de came 21 le long de ladite surface de came 20.

Le profil de la surface de came 20 permet d'adapter le déplacement du suiveur de came 21 le long de la direction de coulissement 25 lors du déplacement du suiveur de came 21 le long de la surface de came 20. Autrement dit, selon le profil de la surface de came 20, le suiveur de came 21 est plus ou moins repoussé vers le fond du logement 17 lorsque ledit suiveur de came 21 se déplace le long de la surface de came 20. Cependant, lorsqu'il est repoussé en direction du logement 17, le suiveur de came 21 repousse le support 22 dans le logement 17 ce qui comprime le ressort 23. Ainsi, la force de rappel appliquée par le suiveur de came 21 sur la came 5 est modifiée en fonction de la position du suiveur de came 21 sur la surface de came 20.

Ainsi, il est possible d'adapter la compression du ressort 23 simplement en modifiant le profil de la surface de came 20. Cette compression du ressort 23 définissant la force de rappel appliquée par le suiveur de came 21 sur la came 5, le profil de la surface de came 20 permet de définir l'effort appliqué sur la pédale 1 par le système de génération d'effort 2.

Ainsi, il est possible d'adapter la force générée par le système de génération d'effort 2 à des besoins spécifiques, par exemples à différentes courbes d'efforts 29, 34 appliquées dans des véhicules différents, par un simple remplacement de la came 5 par une autre came 5 présentant un profil de surface de came 20 différent.

De même, les caractéristiques du ressort 23 permettent également de modifier la force exercée par le système de générateur d'effort 2 sur la pédale 1, le ressort étant en conséquence également sélectionné en fonction de la force de rappel souhaitée.

Pour des raisons d'ergonomie, différentes caractéristiques peuvent être souhaitées pour la force de réaction générée par le système de génération d'effort 2. La courbe 29 de la figure 4 représente un exemple d'une courbe caractéristique de la force de réaction F en fonction du déplacement x de la pédale 1 autour de son axe de rotation X, à partir de la position de repos de la pédale 1.

On voit que la courbe 29 présente une portion croissante 30 durant laquelle la force F générée par le dispositif de rappel augmente en réponse à la rotation de la pédale 1 autour de son axe de rotation X. La portion croissante 30 comporte une première portion de forme concave le long d'une première plage d'actionnement L1, c'est-à-dire avec une dérivée seconde positive, et une deuxième portion croissante de forme convexe le long d'une plage d'actionnement L2, c'est-à-dire avec une dérivée seconde négative. Un point d'inflexion est donc présent à la jonction des plages d'actionnement L1 et L2.

Une portion décroissante 31 est préférentiellement prévue au-delà d'un sommet 32 de la courbe 29 délimitant la plage d'actionnement L2, puis éventuellement une portion croissante 33, juste avant la butée de fin de course. Cette forme générale de courbe comportant une bosse suivie d'une vallée est semblable à une courbe d'embrayage hydraulique conventionnelle. Ainsi, la courbe 34 illustre un autre exemple de courbe caractéristique de la force de rappel correspondant à un embrayage hydraulique conventionnel présentant des caractéristiques distinctes d'un embrayage hydraulique conventionnel permettant d'obtenir la courbe 29.

Afin d'adapter la force de réaction générée par le système de génération d'effort aux propriétés susmentionnées de la courbe 29, il est possible de jouer sur deux propriétés du système de génération d'effort 2 ; d'une part le dispositif de rappel 6 et d'autre part, le profil de la surface de came 20 coopérant avec ledit dispositif de rappel 6. Ainsi, il est possible d'adapter de façon simple la force de réaction générée par le système de génération d'effort 2 aux besoins des différentes pédales de commande.

Un ou plusieurs capteurs de position (non illustrés) peuvent être prévus dans ce système de génération d'effort 2 pour produire des signaux de mesure de position d'une ou plusieurs pièces à transmettre à une unité de commande électronique. Un tel capteur de position permet par exemple de mesurer une position d'une pièce mobile du système de génération d'effort 2.

Le capteur est de préférence linéaire et sans contact. Son connecteur est de préférence placé du côté du compartiment moteur.

Par exemple, un tel capteur peut être associé au corps de support 24. En effet, la position du corps de support 24 dans le logement 17 est liée à la position du suiveur de came 21 le long de la direction de coulissement 25, et donc à la position de la pédale 1 autour de l'axe de rotation X. Ainsi, un capteur associé au corps de support 24 permet avantageusement de connaître la position de la pédale 1, par exemple afin d'envoyer à un actionneur électronique distant ladite position de la pédale 1 pour actionner en conséquence un embrayage.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Système de génération (2) d'effort destiné à être associé à une pédale (1) montée mobile en rotation sur un tablier d'un véhicule automobile, ledit système de génération (2) d'effort comportant
- un carter (14) destiné à être fixé sur le tablier du véhicule,
- une came (5) portant une surface de came (20),
- une bielle (4) présentant une première extrémité (10) destinée à être, en fonctionnement, reliée à la pédale (1) et une deuxième extrémité (19) montée en rotation sur la came (5) autour d'un axe de rotation W,
- un dispositif de rappel élastique comportant :
∘ un suiveur de came (21) mobile en translation le long d'une direction de coulissement (25),
∘ un organe de rappel (23) configuré pour repousser le suiveur de came (21) en direction de la surface de came (20) de manière à ce que le suiveur de came (21) exerce une force de rappel sur la came (5) selon la direction de coulissement (25) du suiveur de came (21),
**caractérisé en ce que** la came (5) est montée mobile en rotation sur le carter (14) autour d'un axe de rotation Z distinct de l'axe de rotation W de la deuxième extrémité (19) de la bielle (4) de sorte que, en déplacement, la bielle (4) entraîne ladite came (5) en rotation autour de l'axe de rotation Z selon un sens de rotation (36) lors d'une rotation de la pédale (1), la surface de came (20) et le suiveur de came (21) étant configurés pour que le suiveur de came (21) se déplace le long de la surface de came (20) lors d'une rotation de la came (5) autour de l'axe de rotation Z et pour que la force de rappel s'oppose à la rotation de la came (5) selon le sens de rotation (36).

2. Système de génération d'effort selon la revendication 1, dans lequel le dispositif de rappel élastique comporte un capteur de déplacement configuré pour détecter la position du suiveur de came (21) le long de la direction de coulissement (25).

3. Système de génération d'effort selon l'une des revendications 1 à 2, dans lequel l'axe de rotation Z de la came est perpendiculaire à la direction de coulissement (25) du suiveur de came (21).

4. Système de génération d'effort selon l'une des revendications 1 à 3, comportant en outre une tige de liaison (7) mobile le long de la direction de coulissement (25) du suiveur de came (21), la première extrémité (10) de la bielle (4) étant monté en rotation sur ladite tige de liaison (7), ladite tige de liaison (7) étant destinée à être montée en rotation sur la pédale (1).

5. Système de génération d'effort selon l'une des revendications 1 à 4, dans lequel la bielle (4) forme un angle avec la direction de coulissement (25) du suiveur de came (21).

6. Système de génération d'effort selon la revendication 5, dans lequel le carter (14) présente une première extrémité cylindrique creuse (17), le dispositif de rappel élastique étant monté dans la première extrémité (17) du carter (14), ladite première extrémité (17) du carter (14) étant configurée pour guider en translation le suiveur de came (21) le long de la direction de coulissement (25) du suiveur de came (21), le carter (14) comportant en outre une deuxième extrémité (15) cylindrique creuse, la tige de liaison (7) étant logée mobile dans et guidée en déplacement par ladite deuxième extrémité (15) creuse.

7. Système de génération d'effort selon la revendication 6, dans lequel le carter (14) comporte une portion centrale (16) creuse, la came (5) étant montée mobile en rotation dans ladite portion centrale (16) creuse.

8. Ensemble d'embrayage comportant un support de pédale destiné à être monté sur un tablier de véhicule automobile, une pédale (1) montée en rotation sur le support de pédale autour d'un axe de rotation X, et un système de génération d'effort (2) selon l'une des revendications 1 à 7, la première extrémité (10) de la bielle (4) étant liée à la pédale (1).

9. Ensemble d'embrayage selon la revendication 8, dans lequel une première extrémité (8) d'une tige de liaison (7) est montée en rotation sur la pédale autour d'une troisième axe de rotation Y, ledit troisième axe de rotation Y étant perpendiculaire à la direction de coulissement (25) du suiveur de came, la première extrémité (10) de la bielle (4) étant montée en rotation sur une deuxième extrémité (9) de la tige de liaison (7).

## Patentansprüche

1. Krafterzeugungssystem (2), welches dazu bestimmt ist, mit einem Pedal (1) verbunden zu werden, das drehbeweglich an einer Spritzwand eines Kraftfahrzeugs gelagert ist, wobei das Krafterzeugungssystem (2) aufweist:
- ein Gehäuse (14), das dazu bestimmt ist, an der Spritzwand des Fahrzeugs befestigt zu werden,
- einen Nocken (5), der eine Nockenfläche (20) trägt,
- eine Schubstange (4), die ein erstes Ende (10), das dazu bestimmt ist, im Betrieb mit dem Pedal (1) verbunden zu sein, und ein zweites Ende (19), das drehbar um eine Drehachse W an dem Nocken (5) angebracht ist, aufweist,
- eine elastische Rückstellvorrichtung, die aufweist:
∘ einen Nockenstößel (21), der entlang einer Gleitrichtung (25) translatorisch beweglich ist,
∘ ein Rückstellorgan (23), das dafür ausgelegt ist, den Nockenstößel (21) in Richtung der Nockenfläche (20) zurückzuschieben, so dass der Nockenstößel (21) eine Rückstellkraft auf den Nocken (5) in der Gleitrichtung (25) des Nockenstößels (21) ausübt,
**dadurch gekennzeichnet, dass** der Nocken (5) am Gehäuse (14) drehbeweglich um eine Drehachse Z gelagert ist, die von der Drehachse W des zweiten Endes (19) der Schubstange (4) verschieden ist, so dass, in Bewegung, die Schubstange (4) bei einer Drehung des Pedals (1) den Nocken (5) um die Drehachse Z in einer Drehrichtung (36) drehend antreibt, wobei die Nockenfläche (20) und der Nockenstößel (21) dafür ausgelegt sind, dass sich der Nockenstößel (21) bei einer Drehung des Nockens (5) um die Drehachse Z entlang der Nockenfläche (20) bewegt und dass die Rückstellkraft der Drehung des Nockens (5) in der Drehrichtung (36) entgegenwirkt.

2. Krafterzeugungssystem nach Anspruch 1, wobei die elastische Rückstellvorrichtung einen Wegsensor aufweist, der dafür ausgelegt ist, die Position des Nockenstößels (21) entlang der Gleitrichtung (25) zu detektieren.

3. Krafterzeugungssystem nach einem der Ansprüche 1 bis 2, wobei die Drehachse Z des Nockens senkrecht zur Gleitrichtung (25) des Nockenstößels (21) ist.

4. Krafterzeugungssystem nach einem der Ansprüche 1 bis 3, welches außerdem eine Verbindungsstange (7) aufweist, die entlang der Gleitrichtung (25) des Nockenstößels (21) beweglich ist, wobei das erste Ende (10) der Schubstange (4) drehbar an der Verbindungsstange (7) gelagert ist, wobei die Verbindungsstange (7) dazu bestimmt ist, an dem Pedal (1) drehbar gelagert zu werden.

5. Krafterzeugungssystem nach einem der Ansprüche 1 bis 4, wobei die Schubstange (4) einen Winkel mit der Gleitrichtung (25) des Nockenstößels (21) bildet.

6. Krafterzeugungssystem nach Anspruch 5, wobei das Gehäuse (14) ein hohles zylindrisches erstes Ende (17) aufweist, wobei die elastische Rückstellvorrichtung in dem ersten Ende (17) des Gehäuses (14) angebracht ist, wobei das erste Ende (17) des Gehäuses (14) dafür ausgelegt ist, den Nockenstößel (21) entlang der Gleitrichtung (25) des Nockenstößels (21) translatorisch zu führen, wobei das Gehäuse (14) außerdem ein hohles zylindrisches zweites Ende (15) aufweist, wobei die Verbindungsstange (7) beweglich in dem hohlen zweiten Ende (15) aufgenommen ist und von ihm bewegbar geführt wird.

7. Krafterzeugungssystem nach Anspruch 6, wobei das Gehäuse (14) einen hohlen mittleren Abschnitt (16) aufweist, wobei der Nocken (5) in dem hohlen mittleren Abschnitt (16) drehbeweglich gelagert ist.

8. Kupplungsanordnung, welche einen Pedalträger, der dazu bestimmt ist, an einer Spritzwand eines Kraftfahrzeugs angebracht zu werden, wobei ein Pedal (1) drehbar um eine Drehachse X auf dem Pedalträger gelagert ist, und ein Krafterzeugungssystem (2) nach einem der Ansprüche 1 bis 7 aufweist, wobei das erste Ende (10) der Schubstange (4) mit dem Pedal (1) verbunden ist.

9. Kupplungsanordnung nach Anspruch 8, wobei ein erstes Ende (8) einer Verbindungsstange (7) drehbar um eine dritte Drehachse Y an dem Pedal gelagert ist, wobei die dritte Drehachse Y senkrecht zur Gleitrichtung (25) des Nockenstößels ist, wobei das erste Ende (10) der Schubstange (4) drehbar an einem zweiten Ende (9) der Verbindungsstange (7) gelagert ist.

## Claims

1. Force generation system (2) intended to be associated with a pedal (1) rotatably mounted on a motor vehicle dashboard, the said force generation system (2) comprising
- a housing (14) intended to be fixed to the vehicle's dashboard,
- a cam (5) carrying a cam surface (20),
- a connecting rod (4) having a first end (10) intended to be, in operation, connected to the pedal (1) and a second end (19) rotatably mounted on the cam (5) about an axis of rotation W,
- an elastic return device comprising :
∘ a cam follower (21) movable in translation along a sliding direction (25),
∘ a return member (23) configured to push the cam follower (21) toward the cam surface (20) so that the cam follower (21) exerts a restoring force on the cam (5) in the sliding direction (25) of the cam follower (21),
wherein the cam (5) is rotatably mounted on the housing (14) about an axis of rotation Z distinct from the axis of rotation W of the second end (19) of the connecting rod (4) so that, in displacement, the connecting rod (4) drives said cam (5) in rotation about the axis of rotation Z in a direction of rotation (36) when the pedal (1) is rotated, the cam surface (20) and the cam follower (21) being configured such that the cam follower (21) moves along the cam surface (20) upon rotation of the cam (5) about the axis of rotation Z and such that the restoring force opposes the rotation of the cam (5) in the direction of rotation (36).

2. Force generation system according to claim 1, wherein the elastic return device has a displacement sensor configured to detect the position of the cam follower (21) along the sliding direction (25).

3. A force generating system according to one of claims 1 to 2, wherein the axis of rotation Z of the cam is perpendicular to the sliding direction (25) of the cam follower (21).

4. Force generating system according to one of claims 1 to 3, further comprising a connecting rod (7) movable along the sliding direction (25) of the cam follower (21), the first end (10) of the connecting rod (4) being rotatably mounted on said connecting rod (7), said connecting rod (7) being intended to be rotatably mounted on the pedal (1).

5. A force generating system according to one of claims 1 to 4, wherein the connecting rod (4) forms an angle with the sliding direction (25) of the cam follower (21).

6. A force generating system according to claim 5, wherein the housing (14) has a first hollow cylindrical end (17), wherein the elastic return device is mounted in the first end (17) of the housing (14), said first end (17) of the housing (14) being configured to guide the cam follower (21) in translation along the sliding direction (25) of the cam follower (21), the housing (14) further comprising a second hollow cylindrical end (15), the connecting rod (7) being movably housed in and guided for movement by said second hollow end (15).

7. A force generating system according to claim 6, wherein the housing (14) comprises a hollow central portion (16), the cam (5) being rotatably mounted in said hollow central portion (16).

8. A clutch assembly comprising a pedal support intended to be mounted on a motor vehicle dashboard, a pedal (1) mounted rotatably on the pedal support about an axis of rotation X, and a force-generating system (2) according to one of claims 1 to 7, the first end (10) of the connecting rod (4) being connected to the pedal (1).

9. A clutch assembly according to claim 8, wherein a first end (8) of a connecting rod (7) is rotatably mounted on the pedal about a third axis of rotation Y, said third axis of rotation Y being perpendicular to the sliding direction (25) of the cam follower, the first end (10) of the connecting rod (4) being rotatably mounted on a second end (9) of the connecting rod (7).
